# EUROPÄISCHE PATENTSCHRIFT

(11) **EP 2 759 751 B1**
(45) Veröffentlichungstag und Bekanntmachung des Hinweises auf die Patenterteilung: **22.11.2017**
(21) Anmeldenummer: 13199712.4
(22) Anmeldetag: 27.12.2013
(51) Int. Cl.: F16K 99/00, B01L 3/00, F04B 43/04

(54) **Verfahren zum Herstellen eines normal-geschlossenen Rückschlagventils für mikrofluidische Bauteile aus einem polymeren Schichtsystem und Rückschlagventil**
Method for producing a normally closed non-return valve for micro-fluid components comprising a polymer layer system and non-return valve
Procédé de fabrication d'un clapet anti-retour fermé-normal pour des composants microfluidiques à partir d'un système stratifié polymère et clapet anti-retour

(30) Priorität: 29.01.2013 DE 102013201342
(43) Veröffentlichungstag der Anmeldung: 30.07.2014
(73) Patentinhaber: ROBERT BOSCH GMBH, 70442 Stuttgart (DE)
(72) Erfinder: Rupp, Jochen, 70178 Stuttgart (DE); Dannenberg, Arne, 70176 Stuttgart (DE)

(56) Entgegenhaltungen:
- EP-A1- 0 789 146
- WO-A2-2008/043046

## Beschreibung

### Stand der Technik

Miniaturisierte Rückschlagventile finden unter anderem Anwendung in Mikropumpen und Lab-on-Chip-Systemen (LOC).

Um eine möglichst geringe Leckrate in Sperrrichtung zu erreichen, wird der Ventilkopf (bewegliche Dichtfläche) des Rückschlagventils für gewöhnlich unter eine Vorspannung gesetzt, so dass dieser - auch wenn keine Druckdifferenz am Ventil anliegt - bereits mit einer definierten Kraft auf den Ventilsitz (unbewegliche Dichtfläche) gedrückt ist. Derartige Rückschlagventile werden daher als normal-geschlossen bezeichnet und gegebenenfalls mit einem Öffnungsdruck charakterisiert. Zum Erreichen der Vorspannung ist aus dem Stand der Technik bereits eine Vielzahl von Lösungsmöglichkeiten bekannt.

Die bekannten Lösungen weisen jedoch den Nachteil auf, dass, um den Ventilkopf unter Vorspannung zu setzen, auf dem eigentlichen Ventilsitz eine zusätzliche Schicht aufgebracht wird, die den Ventilkopf aus seiner Ruhelage auslenkt und auf diese Weise unter Vorspannung setzt. Das Aufbringen dieser zusätzlichen Schicht erfordert eine zusätzliche Folge von Prozessschritten, die je nach dem eingesetzten Verfahren entsprechend aufwändig sein können (zum Beispiel Schichtabscheidung, Belackung, Belichtung, Entwicklung, Strukturierung, Entlackung). Dies alles erhöht entsprechend die Herstellungskosten.

Die nach dem Stand der Technik verwandten Strukturen, welche mittels kostengünstigeren Verfahren als der Standard-Siliziummikrosystemtechnik hergestellt wurden, weisen jedoch ebenfalls Nachteile aufgrund der verwendeten Fertigungsverfahren auf. Mikrostanzen, Laserstrukturierung und ähnliches zum Herstellen des Ventilkopfes führen zu Imperfektionen an den Strukturierungsrändern (Grate, Materialredeposition, Verlust der Planarität aufgrund eingebrachter Spannungen). Diese können das planare Aufliegen des Ventilkopfes auf der Dichtfläche mit der Folge verhindern, dass eine erhöhte Leckrate in Sperrrichtung auftritt. Ebenso verwenden die Ventile für gewöhnlich ein Durchgangsloch in der Dichtfläche, dessen Herstellung mittels Fräsen oder Spritzgießen wiederum die Gefahr von Graten, und somit von Leckagen, mit sich bringt.

Die US 2006/0076068 A1 beschreibt eine mikrofluidische Vorrichtung für biologisches Material mit einer Ventilstruktur, wobei der Ventilkopf jedoch keine Vorspannung aufweist. Stattdessen wird ein Diaphragma mit einem Durchgangsloch eingesetzt, welches per Laserablation eingebracht wird, welche zum Beispiel durch Materialredeposition, wiederum zu Leckagen führen kann. Aus der WO 2008/043046 A2 ist ein Verfahren zum Herstellen eines Rückschlagventils offenbart.
Vorteile der Erfindung Das in dem Anspruch 1 definierte Verfahren zum Herstellen eines normal-geschlossenen Rückschlagventils für mikrofluidische Bauteile aus einem polymeren Schichtsystem sowie das normal-geschlossene Rückschlagventil für mikrofluidische Bauteile nach Anspruch 9 weist gegenüber herkömmlichen Lösungen den Vorteil auf, dass nunmehr keine Strukturierung in der Nähe des Ventilsitzes erforderlich ist. Die Umformung der beweglichen Polymerfolie sorgt für einen zum Ventilsitz planparallelen Dichtelement, weshalb sehr geringe bis keine Leckraten in Sperrrichtung realisierbar sind. Zusätzlich dazu ist aufgrund des Entfalls von kostenintensiven Strukturen in Siliziumtechnik der Einsatz von kostengünstigen, massenfertigungstauglichen Verfahren zur Herstellung des erfindungsgemäßen normal-geschlossenen Rückschlagventils möglich, da bei dem erfindungsgemäßen Herstellungsverfahren Polymere in einem Schichtsystem zum Einsatz kommen.

Des Weiteren ist lediglich ein einziger zusätzlicher Prozessschritt zur Vorspannung der Polymerfolie, zur Bildung eines Durchgangslochs in der Polymerfolie und zur Bildung eines Dichtelements um das Durchgangsloch erforderlich, welches sich kostengünstig realisieren lässt.

In vorteilhafter Weise kann des Weiteren bei dem erfindungsgemäßen Herstellungsverfahren das Aufbringen einer zusätzlichen Schicht zur Vorspannung des Ventils entfallen.

Das erfindungsgemäße normal-geschlossene Rückschlagventil für mikrofluidische Bauteile weist zudem eine tolerantes Ausgestaltung gegenüber Justagefehlern auf, da die Ventilfunktion selbst bei großen Abweichungen der Justage der einzelnen Polymerschichten zueinander noch gewährleistet ist.

Zusätzlich dazu wird in vorteilhafter Weise eine Ermüdung des Ventils durch plastische Verformung bei zu hoher Auslenkung der Polymerfolie aufgrund der Verwendung eines definierten Anschlags für die Polymerfolie vermieden.

Schließlich weist das erfindungsgemäße normal-geschlossene Rückschlagventil für mikrofluidische Bauteile nur ein geringes Totvolumen auf, wodurch sehr kurze Ansprechzeiten erzielt werden können.

Bei dem erfindungsgemäßen Verfahren kann das Ausbilden eines Durchgangslochs in dem Verformungsbereich durch das Aufschmelzen eines vorbestimmten Bereichs des Verformungsbereichs über die gesamte Dicke des Verformungsbereichs erfolgen. Vorzugsweise wird hierbei der Mittenbereich des Verformungsbereichs auf der Breite des Durchgangslochs aufgeschmolzen. Aufschmelzen bedeutet das Einbringen einer solchen Wärmemenge, dass der Werkstoff über dessen gesamte Dicke flüssig wird und aus dem Bereich des Aufschmelzens herausfließt.

Bei dem erfindungsgemäßen Verfahren kann das Ausbilden eines Dichtelements an dem Durchgangsloch durch das Anschmelzen des Verformungsbereichs in radial angrenzender Richtung zu dem Durchgangsloch in Richtung zu dem Verbindungsbereich in einem vorbestimmten zweiten Bereich erfolgen. Anschmelzen bedeutet das Einbringen einer solchen Wärmemenge, dass über die Dicke des Werkstoffs lediglich ein Abschnitt flüssig wird, während der andere fest bleibt.

Bei dem erfindungsgemäßen Verfahren kann das zumindest teilweise plastische Verformen des an den Verbindungsbereich (30) angrenzenden Verformungsbereichs durch das Erwärmen der Polymerfolie, insbesondere zu dem Verbindungsbereich hin, erfolgen. Erwärmen bedeutet das Einbringen einer solchen Wärmemenge, dass über die gesamte Dicke des Werkstoffs dieser fest bleibt. Vorzugsweise wird der Werkstoff lediglich bis zu einer vorbestimmte Dicke erwärmt, so dass sich aufgrund der Temperaturunterschiede über der Dicke Spannungen in dem Werkstoff ausbilden, welche wiederum eine gezielte Verformung des Werkstoffs hervorrufen.

Bei dem erfindungsgemäßen Verfahren kann das zumindest teilweise plastische Verformen des an den Verbindungsbereich angrenzenden Verformungsbereichs der Polymerfolie unter Verwendung von Druck erfolgen. Zur Unterstützung des Prozess kann zusätzlich eine Erwärmung der Polymerfolie auf eine vorbestimmte Temperatur, welche oberhalb der Raumtemperatur liegt, vorgesehen sein, wobei die Erwärmung zum Beispiel mittels elektromagnetischer Strahlung oder Heißluft realisiert werden kann.

Bei dem erfindungsgemäßen Verfahren kann das plastische Verformen des Verformungsbereichs bis zu einer vorbestimmten Höhe von der Oberfläche der ersten Polymerschicht weg erfolgen. Vorzugsweise kann die vorbestimmte Höhe größer oder kleiner als die Ventilkammerhöhe sein.

Bei dem erfindungsgemäßen Verfahren kann das Ausbilden eines Durchgangslochs in dem Verformungsbereich durch Ablation mit Hilfe eines Laser-basierten Verfahrens erfolgen. Hierbei wird durch die Verwendung von gepulster Laserenergie der Werkstoff im Bereich des Durchgangslochs schichtweise abgetragen. Zusätzlich dazu oder alternativ dazu kann das Ausbilden des Durchgangslochs in dem Verformungsbereich durch Aufschmelzen erfolgen.

Das erfindungsgemäße Verfahren kann den Schritt des Verbindens einer zweiten Polymerfolie sowohl mit der Polymerfolie als auch mit der zweiten Polymerschicht aufweisen, wobei die Dicke der zweiten Polymerfolie im Wesentlichen der Ventilkammerhöhe entspricht. Hierdurch kann in vorteilhafter Weise eine ebene zweite Polymerschicht verwendet werden, während die zweite Polymerfolie für die Überbrückung der Ventilkammerhöhe zu der Polymerfolie hin sorgt.

Bei dem erfindungsgemäßen Rückschlagventil kann der Auslass in der ersten Polymerschicht ausgebildet sein. Alternativ dazu kann der Auslass in der zweiten Polymerschicht ausgebildet sein.

Bei dem erfindungsgemäßen Rückschlagventil kann der Auslass in der Form eines zweiten Durchgangslochs ausgebildet sein. Somit kann der Auslass durch ein einfaches, kurzes und kostengünstiges Herstellungsverfahren erzeugt werden.

Bei dem erfindungsgemäßen Rückschlagventil kann der Auslass in der Form eines Kanals ausgebildet sein, welcher sich, ausgehend vom Bereich oberhalb des Durchgangslochs, in einer seitlichen Richtung in der ersten Polymerschicht erstreckt. Je nach Anwendungsfall kann das Auslass somit auch an einer Seite des erfindungsgemäßen Rückschlagventils aus diesem heraustreten.

Bei dem erfindungsgemäßen Rückschlagventil kann der Betrag aus der Auslenkung der Polymerfolie im Bereich des Durchgangslochs, gemessen von der Oberfläche der Polymerfolie, und der Dicke des Dichtelements größer als die vorbestimmte Ventilkammerhöhe sein. Wenn der Betrag größer als die vorbestimmte Ventilkammerhöhe ist, dann kann das erfindungsgemäße Rückschlagventil aufgrund der wirkenden Vorspannung der Polymerfolie als ein normal-geschlossenes Ventil wirken.

Bei dem erfindungsgemäßen Rückschlagventil kann das Dichtelement im Wesentlichen die Form eines Ringes aufweisen. Hierbei wird in vorteilhafter Weise eine umlaufende Dichtung gegenüber dem Medium in der Ventilkammer realisiert, welche des Weiteren Herstellungs- und Montagetoleranzen ausgleichen kann.

Die Polymerschichten können beispielsweise durch Spritzgießen, Spritzprägen, Heißprägen, Laserschneiden, Fräsen oder Stanzen hergestellt werden. Des Weiteren können alle Polymerschichten mittels Kleben, Ultraschallschweißen, Lösungsmittelbonden und/oder Laserschweißen gefügt werden, wobei auch andere geeignete Fügeverfahren verwendet werden können.

Die Polymerschichten bestehen vorzugsweise aus Thermoplasten, wie zum Beispiel PC, PP, PE, PMMA, COP, COC. Die Polymerfolien können aus einem Elastomer, einem thermoplastischen Elastomer oder einem Thermoplasten gebildet werden.

Die Dicke der Polymerschicht kann vorzugsweise zwischen 0,1 mm und 10 mm betragen. Die Dicke der Polymerfolie kann vorzugsweise zwischen 10 µm und 300 µm betragen. Die Höhe der Ventilkammer kann vorzugsweise zwischen 10 µm und 100 µm betragen. Der Durchmesser der Ventilkammer kann vorzugsweise zwischen 200 µm und 2000 µm betragen. Der Durchmesser des Durchgangslochs in der Polymerfolie kann vorzugsweise zwischen 10 µm und 300 µm betragen.

### Kurze Beschreibung der Zeichnungen

Die vorliegende Erfindung wird anhand der beiliegenden Zeichnungen erklärt. Es zeigt dabei
Fig. 1: eine schematische Explosionsdarstellung einer Schnittansicht eines erfindungsgemäßen normal-geschlossenen Rückschlagventils für mikrofluidische Bauteile aus einem polymeren Schichtsystem,
Fig. 2A-2C: eine schematische Darstellung der Funktionsweise des erfindungsgemäßen normal-geschlossenen Rückschlagventils für mikrofluidische Bauteile aus einem polymeren Schichtsystem gemäß Fig. 1,
Fig. 3A-3C: eine erste Abfolge von erfindungsgemäßen Verfahrensschritten zur Herstellung des erfindungsgemäßen normal-geschlossenen Rückschlagventils für mikrofluidische Bauteile aus einem polymeren Schichtsystem,
Fig. 4: eine Seitenansicht eines Verfahrensschritts zur Herstellung des erfindungsgemäßen normal-geschlossenen Rückschlagventils für mikrofluidische Bauteile aus einem polymeren Schichtsystem,
Fig. 5A und 5B: eine alternative Abfolge von erfindungsgemäßen Verfahrensschritten zur Herstellung des erfindungsgemäßen normal-geschlossenen Rückschlagventils für mikrofluidische Bauteile aus einem polymeren Schichtsystem,
Fig. 6: eine Seitenansicht eines weiteren Verfahrensschritts zur Herstellung des erfindungsgemäßen normal-geschlossenen Rückschlagventils für mikrofluidische Bauteile aus einem polymeren Schichtsystem,
Fig. 7A und 7B: eine weitere Abfolge von erfindungsgemäßen Verfahrensschritten zur Herstellung des erfindungsgemäßen normal-geschlossenen Rückschlagventils ausgehend von dem Verfahrensschritt gemäß Fig. 6,
Fig. 8A-8C: eine alternative Abfolge von erfindungsgemäßen Verfahrensschritten zur Herstellung des erfindungsgemäßen normal-geschlossenen Rückschlagventils ausgehend von dem Verfahrensschritt gemäß Fig. 6, und
Fig. 9: eine Schnittansicht eines weiteren Ausführungsbeispiels für ein erfindungsgemäßes normal-geschlossenes Rückschlagventil für mikrofluidische Bauteile aus einem polymeren Schichtsystem.

### Ausführungsformen der Erfindung

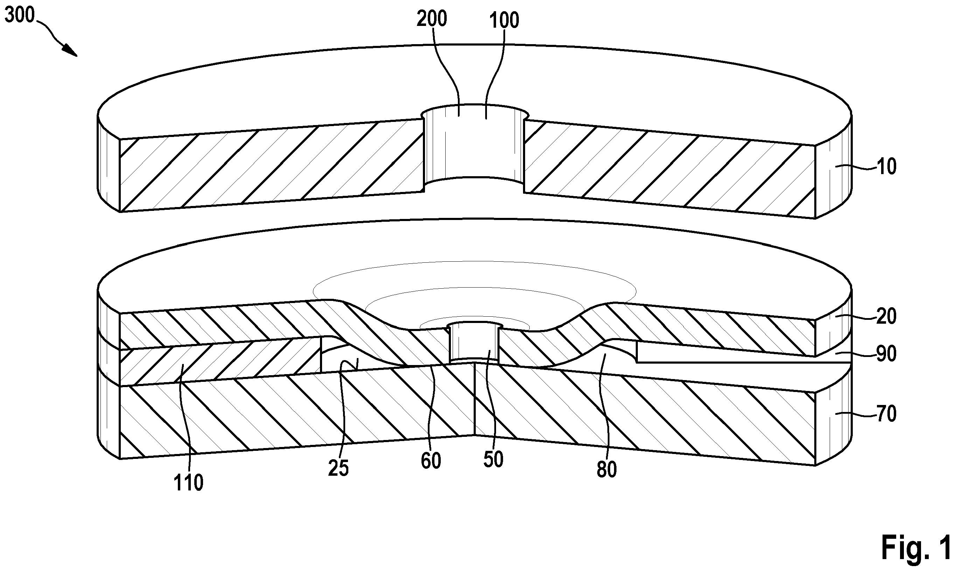

Fig. 1 zeigt eine schematische Explosionsdarstellung einer Schnittansicht eines erfindungsgemäßen normal-geschlossenen Rückschlagventils 300 für mikrofluidische Bauteile aus einem polymeren Schichtsystem. Das Schichtsystem besteht aus einer ersten Polymerschicht 10 als einer festen Deckelschicht und einer zweiten Polymerschicht 70 als einer festen Bodenschicht, zwischen denen eine Polymerfolie 20 als eine flexible Ventilfolie aufgebracht ist. Die zweite Polymerschicht 70 weist eine planare Oberfläche 25 auf. Eine zweite Polymerfolie 110 als eine (gegebenenfalls ebenfalls flexible) Folie ist zwischen der Polymerfolie 20 und der zweiten Polymerschicht 70 angeordnet. In der Polymerfolie 20 wird mit Hilfe einer Aussparung eine Ventilkammer 80 gebildet, welche mit einem Einlass 90 verbunden ist, der sich durch die Polymerfolie 20 erstreckt. Die Polymerfolie 20 weist des Weiteren in ihrem Mittenbereich ein Durchgangsloch 50 auf, an dessen Unterseite sich angrenzend ein Dichtelement 60 befindet. Die erste Polymerschicht 10 weist im Mittenbereich einen Auslass 100 auf, welcher in der Art eines Durchgangslochs 200 ausgebildet ist.

Alternativ kann auf diese zweite Polymerfolie 110 verzichtet werden, wenn die zweite Polymerschicht 70 über eine entsprechende Oberflächentopologie zur Ausbildung der Ventilkammer 80 mit der Polymerfolie 20 verfügt. Die Polymerfolie 20 ist mit den anderen Polymerschichten 10, 70, sowie gegebenenfalls mit der zweiten Polymerfolie 110, derart gefügt, dass sie auf der einen Seite die Ventilkammer 80 seitlich abdichtet, und auf der anderen Seite im Inneren der Ventilkammer 80 verformbar und beweglich bleibt.

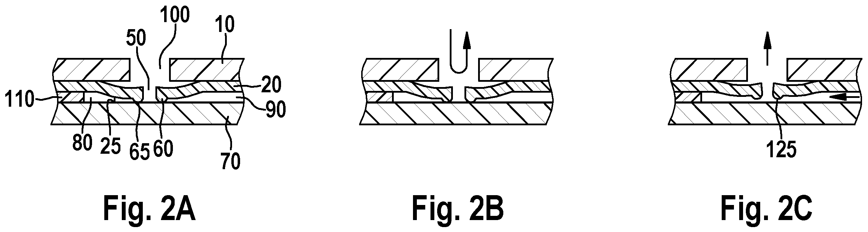

Fig. 2A-2C zeigen eine schematische Darstellung der Funktionsweise des erfindungsgemäßen normal-geschlossenen Rückschlagventils für mikrofluidische Bauteile aus einem polymeren Schichtsystem gemäß Fig. 1. Die Polymerfolie 20 weist ein Durchgangsloch 50 auf, wobei im Bereich von dessen Unterseite ein Dichtring 60 ausgebildet ist. Durch die Verwölbung der Polymerfolie 20 aufgrund der eingebrachten plastischen Verformung wird der Dichtring 60 auf eine planare Oberfläche 25 der zweiten Polymerschicht 70 gedrückt und bildet darüber eine geschlossene Dichtfläche 65, welche ein Medium im Einlass 90 trotz des Durchgangslochs 50 von einem Auslass 100 trennt.

Fig. 2A zeigt in einer vergrößerten Ansicht die Ruhelage des erfindungsgemäßen normal-geschlossenen Rückschlagventils. In der Ruhelage wirkt am Einlass 90 ein gleich großer Druck wie am Auslass 100: Wie oben beschrieben, drückt die Polymerfolie 20 ihren Dichtring 60 an die planare Oberfläche 25 der zweiten Polymerschicht 70 und bildet auf diese Weise die geschlossene Dichtfläche 65.

Fig. 2B zeigt eine vergrößerte Ansicht der Sperrrichtung für das erfindungsgemäße normal-geschlossene Rückschlagventil. In der Sperrrichtung liegt am Auslass 100 ein höherer Druck als am Einlass 90 an. Aufgrund der Druckdifferenz zwischen Auslass 100 und Einlass 90 presst die Polymerfolie 20 den Dichtring 60 noch stärker auf die Dichtfläche 65, so dass ein Durchströmen in Richtung zu dem Einlass 90 verhindert wird.

Fig. 2C zeigt eine vergrößerte Ansicht der Durchlassrichtung für das erfindungsgemäße normal-geschlossene Rückschlagventil. In der Durchlassrichtung liegt am Einlass 90 ein höherer Druck als am Auslass 100 an. Die Polymerfolie 20 hebt, entgegen der in der Polymerfolie 20 wirkenden plastischen Verformung, aufgrund der an ihr anliegenden Druckdifferenz den Dichtring 60 von der Dichtfläche 65 ab, so dass durch einen Ventilspalt 125 Fluid in Richtung zu dem Auslass 100 fließen kann. Bei (sehr) hohen Drücken in Durchlassrichtung dient die erste Polymerschicht 10 als ein Anschlag für die Auslenkung der Polymerfolie 20, so dass deren plastische Verformung, und somit ein möglicher Funktionsverlust, effektiv vermieden wird.

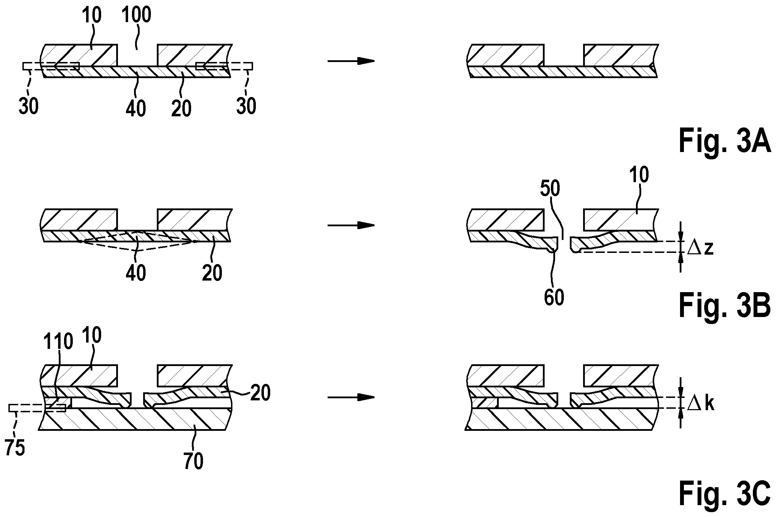

Fig. 3A-3C zeigen eine erste Abfolge von erfindungsgemäßen Verfahrensschritten zur Herstellung des erfindungsgemäßen normal-geschlossenen Rückschlagventils für mikrofluidische Bauteile aus einem polymeren Schichtsystem.

Fig. 3A zeigt den Verfahrensschritt des Verbindens der Polymerfolie 20 mit der ersten Polymerschicht 10. Dabei wird mittels Anschweißen der Polymerfolie 20 an die erste Polymerschicht 10 ein Verbindungsbereich 30 mit einer vorbestimmten Form und ein von dem Verbindungsbereich 30 innenliegender unverbundener Verformungsbereich 40 gebildet.

Fig. 3B zeigt die Verfahrensschritte des abschnittsweisen Ausbildens einer plastischen Verformung in der Polymerfolie 20 in dem Verformungsbereich 40, des Ausbildens eines Durchgangslochs 50 in dem Verformungsbereich 40, und des Ausbildens eines Dichtelements 60 an dem Durchgangsloch 50. In den Verformungsbereich 40 wird eine Laserleistung eingebracht, welche radial zum zu bildenden Durchgangsloch 50 variiert wird (siehe hierzu in schematischer Darstellung die Raute auf der linke Seite von Fig. 3B entsprechend der lokal eingebrachten Laserleistung).

In der Mitte des Verformungsbereichs 40 wird die höchste thermische Leistung durch den Laser (nicht dargestellt) eingebracht, so dass die Polymerfolie 20 an dieser Stelle vollständig über ihre gesamte Dicke aufschmilzt. Aufgrund der Oberflächenspannung bildet das geschmolzene Polymer einen Torus, welcher an seiner Außenseite an der angrenzenden nicht-geschmolzenen Polymerfolie 20 aufgehängt ist und sich nach dem Abkühlen zu dem Dichtelement 60 ausbildet.

In Richtung zu dem Verbindungsbereich 30 hin wird eine geringere Laserleitung in die Polymerfolie 20 eingebracht, so dass die Polymerfolie 20 nicht mehr über ihre gesamte Dicke aufschmilzt und der Torus bzw. das Dichtelement 60 lediglich auf der schmelzenden Seite der Polymerfolie 20 weiter nach außen - und in Richtung seiner Dicke - anwächst. Auf diese Weise ist es möglich, das Dichtelement 60 nur auf einer Seite der Polymerfolie 20 auszubilden. In Fig. 3B ist dies die von der ersten Polymerschicht 10 abgewandte Seite. Ein zusätzliches Dichtelement (nicht dargestellt), welches analog zu dem Dichtelement 60 ausgebildet ist, auf der Rückseite der Polymerfolie 20 (zu der ersten Polymerschicht 10 hin) würde den maximal möglichen Hub der Polymerfolie 20 erniedrigen und damit die maximale Öffnung des Ventilspalts 125 verkleinern und somit den Durchfluss in Durchlassrichtung reduzieren.

Noch weiter in Richtung zu dem Verbindungsbereich 30 hin wird die Laserleistung so stark abgesenkt, dass das Material der Polymerfolie 20 nicht mehr aufgeschmolzen wird, aber eine permanente Spannung in diesen Bereich der Polymerfolie 20 eingebracht wird, welche als eine Vorspannung wirkt, so dass eine Wirkungsweise der Anordnung in der Art eines normal-geschlossenen Rückschlagventils realisiert wird.

Insgesamt führt ein solcher Wärmeeintrag zu einer Auslenkung der Polymerfolie 20 in diejenige Richtung, von der die Wärmeleistung eingebracht worden ist, kann jedoch in Abhängigkeit von dem Materialverhalten auch in die entgegen gesetzte Richtung erfolgen. Zusammen mit der Dicke des Dichtelements 60 ergibt sich eine Gesamthöhe für den ausgelenkten Bereich der Polymerfolie 20, welche in Fig. 3B als Δz bezeichnet ist. Diese muss größer als die Höhe der Ventilkammer sein, damit das erfindungsgemäße Rückschlagventil normal-geschlossen ist.

Fig. 3C zeigt den Verfahrensschritt des Verbindens der zweiten Polymerschicht 70 mit der Polymerfolie 20 und der zweiten Polymerfolie 110, wobei zwischen dem Verformungsbereich 40 und der zweiten Polymerschicht 70 eine Ventilkammer 80 mit einer vorbestimmten Ventilkammerhöhe Δk ausgebildet wird. Das Anschweißen der zweiten Polymerschicht 70 auf der zweiten Polymerfolie 110 erfolgt in einem zweiten Verbindungsbereich 75. Maßgeblich für die Höhe der Ventilkammer Δk ist die Höhe der zweiten Polymerfolie 110.

Aufgrund der Planarität der zweiten Polymerschicht 70 ist leicht ersichtlich, dass eine Fehljustage keinen Einfluss auf die Dichtwirkung des erfindungsgemäßen normal-geschlossenen Rückschlagventils hat.

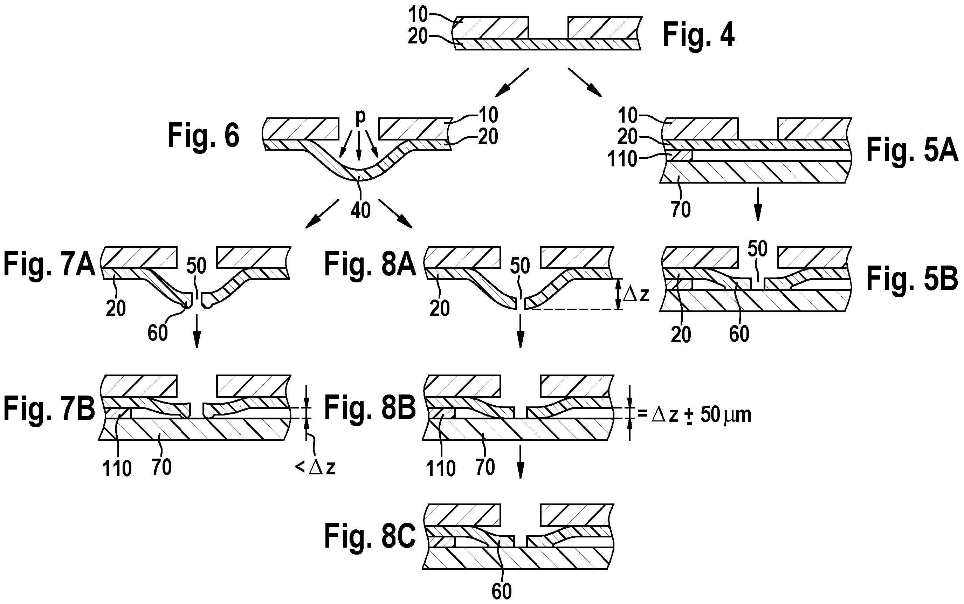

Fig. 4 zeigt eine Seitenansicht eines Verfahrensschritts zur Herstellung des erfindungsgemäßen normal-geschlossenen Rückschlagventils für mikrofluidische Bauteile aus einem polymeren Schichtsystem. Hierbei handelt es sich im Wesentlichen um den Verfahrensschritt des Verbindens der Polymerfolie 20 mit der ersten Polymerschicht 10 gemäß Fig. 3A, weshalb auf die zugehörigen Ausführungen oberhalb verwiesen wird.

Fig. 5A und 5B zeigen eine alternative Abfolge von erfindungsgemäßen Verfahrensschritten zur Herstellung des erfindungsgemäßen normal-geschlossenen Rückschlagventils für mikrofluidische Bauteile aus einem polymeren Schichtsystem, wobei nach dem Verfahrensschritt gemäß Fig. 4 der Verfahrensschritt des Verbindens der zweiten Polymerschicht 70 mit der Polymerfolie 20 sowie mit der zwischenliegenden zweiten Polymerfolie 110 erfolgt. Anschließend wird gemäß Fig. 5B in der Polymerfolie 20 das Durchgangsloch 50, das Dichtelement 60 ausgebildet und die plastische Verformung in die Polymerfolie 20 eingebracht.

Fig. 6 zeigt eine Seitenansicht eines weiteren Verfahrensschritts zur Herstellung des erfindungsgemäßen normal-geschlossenen Rückschlagventils für mikrofluidische Bauteile aus einem polymeren Schichtsystem, wobei nach dem Verfahrensschritt gemäß Fig. 4. der Verfahrensschritt des Ausbildens einer plastischen Verformung in der Polymerfolie 20 in dem Verformungsbereich 40 durch Druckbeaufschlagung erfolgt, welche die Polymerfolie 20 plastisch vorverformt. Die Auslenkung aufgrund der Druckbeaufschlagung kann größer oder kleiner der späteren Ventilkammerhöhe (nicht dargestellt) sein. Anstelle von einer Druckbeaufschlagung kann auf derjenigen Seite des Verformungsbereichs 40, welche der ersten Polymerschicht 10 abgewandt ist, ein Unterdruck angelegt werden. Der Prozess kann unterstützt werden, indem das Material erwärmt wird, zum Beispiel mittels (Laser)Licht oder Warmluft.

Fig. 7A und 7B zeigen eine weitere Abfolge von erfindungsgemäßen Verfahrensschritten zur Herstellung des erfindungsgemäßen normal-geschlossenen Rückschlagventils ausgehend von dem Verfahrensschritt gemäß Fig. 6. Zunächst werden das Durchgangsloch 50 und das Dichtelement 60 ausgebildet (Fig. 7A), wobei das in der Beschreibung zu Fig. 3B erklärte Verfahren Anwendung finden kann. Anschließend erfolgt der Verfahrensschritt des Verbindens der zweiten Polymerschicht 70 mit der Polymerfolie 20 sowie mit der zwischenliegenden zweiten Polymerfolie 110 (Fig. 7B). Eine Beschreibung eines entsprechenden Verfahrens findet sich beispielsweise in der Beschreibung von Fig. 3B.

Fig. 8A-8C zeigen eine alternative Abfolge von erfindungsgemäßen Verfahrensschritten zur Herstellung des erfindungsgemäßen normal-geschlossenen Rückschlagventils ausgehend von dem Verfahrensschritt gemäß Fig. 6, wobei zuerst das Durchgangsloch 50 mittels Ablation, vorzugsweise durch Laser, in der Polymerfolie 20 ausgebildet wird (Fig. 8A). Anschließend erfolgt der Verfahrensschritt des Verbindens der zweiten Polymerschicht 70 mit der Polymerfolie 20 sowie mit der zwischenliegenden zweiten Polymerfolie 110 (Fig. 8B). Abschließend wird das Dichtelement 60 in der Polymerfolie 20 ausgebildet (Fig. 8C). Wird das Dichtelement 60 erst bei dem gedeckeltem Aufbau gemäß Fig. 8 hergestellt, so ist auf eine entsprechende Laserleistung/-dosis zu achten, die zwar die Polymerfolie 20 aufschmilzt, aber nicht zu einer Schweißverbindung des aufgeschmolzenen Werkstoffs der Polymerfolie 20 bzw. der Polymerfolie 20 selbst mit der zweiten Polymerschicht 70 führt.

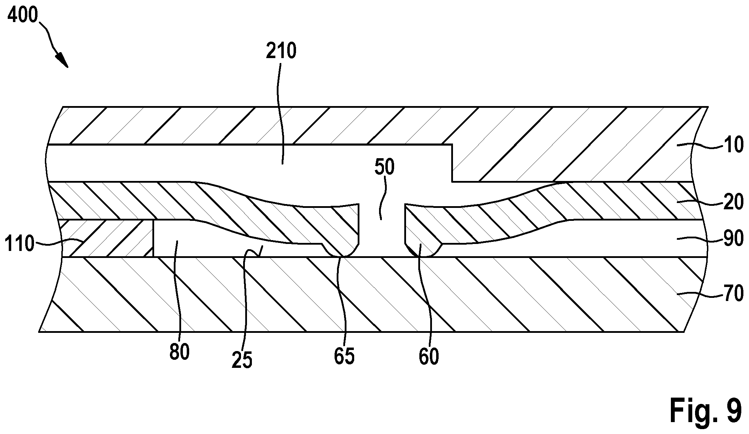

Fig. 9 zeigt eine Schnittansicht eines weiteren Ausführungsbeispiels für ein erfindungsgemäßes normal-geschlossenes Rückschlagventil 400 für mikrofluidische Bauteile aus einem polymeren Schichtsystem. Der Aufbau des normal-geschlossenen Rückschlagventils 400 ist prinzipiell ähnlich zu dem Aufbau des Rückschlagventils von Fig. 1, so dass lediglich die Unterschiede zu diesem beschrieben werden.

Das Rückschlagventil 400 weist anstelle eines Durchlochs in der ersten Polymerschicht 10 einen Auslass in der Form eines Auslasskanals 210 auf, welcher sich, ausgehend vom Bereich oberhalb des Durchgangslochs 50, in einer seitlichen Richtung in der ersten Polymerschicht 10 erstreckt.

In einer nicht dargestellten weiteren Ausführungsform kann der Einlass mittels eines Durchgangslochs am Rand der Ventilkammer ausgebildet sein.

## Patentansprüche

1. Verfahren zum Herstellen eines normal-geschlossenen Rückschlagventils (300) für mikrofluidische Bauteile aus einem polymeren Schichtsystem, mit den Schritten:
- Bereitstellen einer ersten Polymerschicht (10),
- zumindest teilweises Verbinden einer Polymerfolie (20) mit der ersten Polymerschicht (10) in einem Verbindungsbereich (30),
- zumindest teilweises plastisches Verformen eines an den Verbindungsbereich (30) angrenzenden Verformungsbereich (40) der Polymerfolie (20),
- Ausbilden eines Durchgangslochs (50) in dem Verformungsbereich (40),
- Ausbilden eines Dichtelements (60) in dem Verformungsbereich (40) um das Durchgangsloch (50),
- Verbinden einer zweiten Polymerschicht (70) mit der Polymerfolie (20), wobei zwischen dem Verformungsbereich (40) und der zweiten Polymerschicht (70) eine Ventilkammer (80) mit einer vorbestimmten Ventilkammerhöhe (Δk) ausgebildet wird, und wobei durch eine zumindest teilweise elastische Verformung des Verformungsbereichs (40) das Dichtelement (60) auf die zweite Polymerschicht (70) gedrückt wird und damit eine fluidische Verbindung zwischen der Ventilkammer (80) und dem Durchgangsloch (50) blockiert.

2. Verfahren nach Anspruch 1, wobei das Ausbilden eines Durchgangslochs (50) in dem Verformungsbereich (40) durch das Aufschmelzen eines vorbestimmten Bereichs des Verformungsbereichs (40) über die gesamte Dicke des Verformungsbereichs (40) erfolgt.

3. Verfahren nach Anspruch 1 oder 2, wobei das Ausbilden eines Dichtelements (60) an dem Durchgangsloch (50) durch das Anschmelzen des Verformungsbereichs (40) in radial angrenzender Richtung zu dem Durchgangsloch (50) in Richtung zu dem Verbindungsbereich (30) in einem vorbestimmten zweiten Bereich erfolgt.

4. Verfahren nach einem der Ansprüche 1 bis 3, wobei das zumindest teilweise plastische Verformen des an den Verbindungsbereich (30) angrenzenden Verformungsbereichs (40) durch das Erwärmen der Polymerfolie (20), insbesondere zu dem Verbindungsbereich (30) hin, erfolgt.

5. Verfahren nach einem der Ansprüche 1 bis 3, wobei das zumindest teilweise plastische Verformen des an den Verbindungsbereich (30) angrenzenden Verformungsbereichs (40) der Polymerfolie (20) unter Verwendung von Druck erfolgt.

6. Verfahren nach Anspruch 5, wobei das plastische Verformen des Verformungsbereichs (40) bis zu einer vorbestimmten Höhe von der Oberfläche der ersten Polymerschicht (10) weg erfolgt.

7. Verfahren nach einem der Ansprüche 3 bis 6, wobei das Ausbilden eines Durchgangslochs (50) in dem Verformungsbereich (40) durch Ablation mit Hilfe eines Laser-basierten Verfahrens erfolgt.

8. Verfahren nach einem der Ansprüche 1 bis 7, des Weiteren mit dem Schritt des Verbindens einer zweiten Polymerfolie (110) sowohl mit der Polymerfolie (20) als auch mit der zweiten Polymerschicht (70), wobei die Dicke der zweiten Polymerfolie (110) im Wesentlichen der Ventilkammerhöhe (Δk) entspricht.

9. Normal-geschlossenes Rückschlagventil für mikrofluidische Bauteile aus einem polymeren Schichtsystem, aufweisend:
- eine erste Polymerschicht (10),
- eine Polymerfolie (20).
- ein Durchgangsloch (50), welches in einem Verformungsbereich (40) der Polymerfolie (20) ausgebildet ist,
- ein Dichtelement (60), welches in dem Verformungsbereich (40) um das Durchgangsloch (50) ausgebildet ist,
- einer zweiten Polymerschicht (70), welche mit der Polymerfolie (20) verbunden ist, wobei zwischen dem Verformungsbereich (40) und der zweiten Polymerschicht (70) eine Ventilkammer (80) mit einer vorbestimmten Ventilkammerhöhe (Δk) ausgebildet wird, und wobei durch eine zumindest teilweise elastische Verformung des Verformungsbereichs (40) das Dichtelement (60) auf die zweite Polymerschicht (70) gedrückt wird und damit eine fluidische Verbindung zwischen der Ventilkammer (80) und dem Durchgangsloch (50) blockiert,
**dadurch gekennzeichnet, dass** die Polymerfolie (20) zumindest teilweise mit der ersten Polymerschicht (10) in einem Verbindungsbereich (30) verbunden ist, und dass der Verformungsbereich (40) der Polymerfolie (20), welcher durch zumindest teilweises plastisches Verformen gebildet ist, angrenzend an den Verbindungsbereich (30) ist.

10. Rückschlagventil nach einem der Ansprüche 1 bis 9, wobei ein Auslass (100) aus der Ventilkammer (80) in der ersten Polymerschicht (10) ausgebildet ist.

11. Rückschlagventil nach Anspruch 10, wobei der Auslass (100) in der Form eines zweiten Durchgangslochs (200) ausgebildet ist.

12. Rückschlagventil nach Anspruch 10, wobei der Auslass (100) in der Form eines Kanals (210) ausgebildet ist, welcher sich, ausgehend vom Bereich oberhalb des Durchgangslochs (50), in einer seitlichen Richtung in der ersten Polymerschicht (10) erstreckt.

13. Rückschlagventil nach einem der Ansprüche 9 bis 12, wobei der Betrag (Δz) aus der Auslenkung der Polymerfolie (20) im Bereich des Durchgangslochs (50), gemessen von der Oberfläche der Polymerfolie (20), und der Dicke des Dichtelements (60) größer als die vorbestimmte Ventilkammerhöhe (Δk) ist.

14. Rückschlagventil nach einem der Ansprüche 8 bis 13, wobei das Dichtelement (60) im Wesentlichen die Form eines Ringes aufweist.

## Claims

1. Method for producing a normally closed non-return valve (300) for microfluidic components composed of a polymer layer system, comprising the steps of:
- providing a first polymer layer (10),
- at least partially connecting a polymer film (20) to the first polymer layer (10) in a connection region (30),
- at least partially plastically deforming a deformation region (40), adjacent to the connection region (30), of the polymer film (20),
- forming a through hole (50) in the deformation region (40),
- forming a sealing element (60) in the deformation region (40) around the through hole (50),
- connecting a second polymer layer (70) to the polymer film (20), wherein a valve chamber (80) having a predetermined valve chamber height (Δk) is formed between the deformation region (40) and the second polymer layer (70), and wherein, by at least partial elastic deformation of the deformation region (40), the sealing element (60) is pressed onto the second polymer layer (70) and consequently blocks a fluidic connection between the valve chamber (80) and the through hole (50).

2. Method according to Claim 1, wherein the formation of a through hole (50) in the deformation region (40) is realized by the melting of a predetermined region of the deformation region (40) over the entire thickness of the deformation region (40).

3. Method according to Claim 1 or 2, wherein the formation of a sealing element (60) at the through hole (50) is realized in a predetermined second region by the partial melting of the deformation region (40) in the radially adjacent direction in relation to the through hole (50) in the direction towards the connection region (30).

4. Method according to one of Claims 1 to 3, wherein the at least partial plastic deformation of the deformation region (40) adjacent to the connection region (30) is realized by the heating of the polymer film (20), in particular towards the connection region (30).

5. Method according to one of Claims 1 to 3, wherein the at least partial plastic deformation of the deformation region (40), adjacent to the connection region (30), of the polymer film (20) is realized by the use of pressure.

6. Method according to Claim 5, wherein the plastic deformation of the deformation region (40) is realized up to a predetermined height away from the surface of the first polymer layer (10).

7. Method according to one of Claims 3 to 6, wherein the formation of a through hole (50) in the deformation region (40) is realized by ablation with the aid of a laser-based process.

8. Method according to one of Claims 1 to 7, furthermore having the step of connecting a second polymer film (110) both to the polymer film (20) and to the second polymer layer (70), wherein the thickness of the second polymer film (110) corresponds substantially to the valve chamber height (Δk).

9. Normally closed non-return valve for microfluidic components composed of a polymer layer system, having:
- a first polymer layer (10),
- a polymer film (20),
- a through hole (50) which is formed in a deformation region (40) of the polymer film (20),
- a sealing element (60) which is formed in the deformation region (40) around the through hole (50),
- a second polymer layer (70) which is connected to the polymer film (20), wherein a valve chamber (80) having a predetermined valve chamber height (Δk) is formed between the deformation region (40) and the second polymer layer (70), and wherein, by at least partial elastic deformation of the deformation region (40), the sealing element (60) is pressed onto the second polymer layer (70) and consequently blocks a fluidic connection between the valve chamber (80) and the through hole (50), **characterized in that** the polymer film (20) is at least partially connected to the first polymer layer (10) in a connection region (30), and **in that** the deformation region (40) of the polymer film (20), which region is formed by at least partial plastic deformation, is adjacent to the connection region (30).

10. Non-return valve according to one of Claims 1 to 9, wherein an outlet (100) from the valve chamber (80) is formed in the first polymer layer (10).

11. Non-return valve according to Claim 10, wherein the outlet (100) is formed in the form of a second through hole (200).

12. Non-return valve according to Claim 10, wherein the outlet (100) is formed in the form of a channel (210) which, starting from the region above the through hole (50), extends in a lateral direction in the first polymer layer (10).

13. Non-return valve according to one of Claims 9 to 12, wherein the sum (Δz) of the deflection of the polymer film (20) in the region of the through hole (50), measured from the surface of the polymer film (20), and the thickness of the sealing element (60) is greater than the predetermined valve chamber height (Δk).

14. Non-return valve according to one of Claims 8 to 13, wherein the sealing element (60) substantially has the form of a ring.

## Revendications

1. Procédé de fabrication d'une soupape de retenue (300) normalement fermée pour composants microfluidiques à partir d'un système de couches de polymère, avec les étapes suivantes :
- mise à disposition d'une première couche de polymère (10) ;
- jonction au moins partielle d'un film polymère (20) avec une première couche de polymère (10) dans une zone de jonction (30) ;
- déformation plastique au moins partielle d'une zone de déformation (40), connexe à la zone de jonction (30), du film polymère (20) ;
- formation d'un trou traversant (50) dans la zone de déformation (40) ;
- formation d'un élément d'étanchéité (60) dans la zone de déformation (40) autour du trou traversant (50) ;
- jonction d'une deuxième couche de polymère (70) avec le film polymère (20), une chambre de soupape (80) avec une hauteur de chambre de soupape (Δk) prédéfinie étant réalisée entre la zone de déformation (40) et la deuxième couche de polymère (70) et l'élément d'étanchéité (60) étant comprimé sur la deuxième couche de polymère (70) par une déformation au moins en partie élastique de la zone de déformation (40) et bloquant ainsi une jonction fluidique entre la chambre de soupape (80) et le trou traversant (50).

2. Procédé selon la revendication 1, la formation d'un trou traversant (50) dans la zone de déformation (40) se produisant par la fusion d'une zone prédéfinie de la zone de déformation (40) sur l'épaisseur totale de la zone de déformation (40).

3. Procédé selon la revendication 1 ou 2, la formation d'un élément d'étanchéité (60) au niveau du trou traversant (50) se produisant en fusionnant la zone de déformation (40) dans la direction connexe dans le plan radial au trou traversant (50) en direction de la zone de jonction (30) dans une deuxième zone prédéfinie.

4. Procédé selon l'une quelconque des revendications 1 à 3, la déformation au moins en partie plastique de la zone de déformation (40) connexe à la zone de jonction (30) s'effectuant par chauffage du film polymère (20), notamment en direction de la zone de jonction (30).

5. Procédé selon l'une quelconque des revendications 1 à 3, la déformation au moins en partie plastique de la zone de déformation (40), connexe à la zone de jonction (30), du film polymère (20) se produisant sous utilisation de pression.

6. Procédé selon la revendication 5, la déformation plastique de la zone de déformation (40) jusqu'à une hauteur prédéfinie se produit à partir de la surface de la première couche de polymère (10).

7. Procédé selon l'une quelconque des revendications 3 à 6, la formation d'un trou traversant (50) dans la zone de déformation (40) se produit par ablation à l'aide d'un procédé à base de laser.

8. Procédé selon l'une quelconque des revendications 1 à 7, en outre avec l'étape de jonction d'un deuxième film polymère (110) tant avec le film polymère (20) qu'avec la deuxième couche de polymère (70), l'épaisseur du deuxième film polymère (110) correspondant pour l'essentiel à la hauteur de chambre de soupape (Δk).

9. Soupape de retenue normalement fermée pour composants microfluidiques provenant d'un système de couches de polymère, comportant :
- une première couche de polymère (10) ;
- un film polymère (20) ;
- un trou traversant (50) réalisé dans une zone de déformation (40) du film polymère (20) ;
- un élément d'étanchéité (60) réalisé dans la zone de déformation (40) autour du trou traversant (50) ;
- une deuxième couche de polymère (70) reliée au film polymère (20), une chambre de soupape (80) avec une hauteur de chambre de soupape (Δk) prédéfinie étant réalisée entre la zone de déformation (40) et la deuxième couche de polymère (70) ; et
l'élément d'étanchéité (60) étant comprimé sur la deuxième couche de polymère (70) par une déformation au moins en partie élastique de la zone de déformation (40), bloquant ainsi une jonction fluidique entre la chambre de soupape (80) et le trou traversant (50) ;
**caractérisée en ce que** le film polymère (20) est relié au moins en partie à la première couche de polymère (10) dans une zone de jonction (30) et que la zone de déformation (40) du film polymère (20) formé par déformation plastique au moins partielle est connexe à la zone de jonction (30).

10. Soupape de retenue selon l'une quelconque des revendications 1 à 9, un échappement (100) hors de la chambre de soupape (80) étant réalisé dans la première couche de polymère (10).

11. Soupape de retenue selon la revendication 10, l'échappement (100) étant réalisé sous la forme d'un deuxième trou traversant (200).

12. Soupape de retenue selon la revendication 10, l'échappement (100) étant réalisé sous la forme d'un canal (210) s'étendant dans la première couche de polymère (10), à partir de la région située au-dessus du trou traversant (50), dans une direction latérale.

13. Soupape de retenue selon l'une quelconque des revendications 9 à 12, la valeur (Δz) de l'orientation du film polymère (20) dans la région du trou traversant (50) étant mesurée à partir de la surface du film polymère (20) et l'épaisseur de l'élément d'étanchéité (60) étant supérieure à la hauteur de chambre de soupape (Δk) prédéfinie.

14. Soupape de retenue selon l'une quelconque des revendications 8 à 13, l'élément d'étanchéité (60) prenant pour l'essentiel la forme d'une bague.
